# EUROPÄISCHE PATENTANMELDUNG

(11) **EP 0 676 343 A1**
(43) Veröffentlichungstag der Anmeldung: **11.10.1995**
(21) Anmeldenummer: 95105310.7
(22) Anmeldetag: 07.04.1995
(51) Int. Cl.: B65F 3/02, E01H 1/08

(54) **Sammeleinrichtung für Gras, Laub, Schmutz**

(30) Priorität: 11.04.1994 DE 9405807 U
(71) Anmelder: MOHR, Hermann, D-91792 Ellingen (DE)
(72) Erfinder: MOHR, Hermann, D-91792 Ellingen (DE)

(57) **Zusammenfassung**

Vorrichtung zum Aufsammeln von Gras, Laub oder Schmutz oder sonstigen anfallenden Stoffen in einem Behälter (6) der Gestalt, daß die Vorrichtung so ausgelegt ist, daß ein für alle Zwecke verwendbarer Müllbehälter (6) eingesetzt werden kann, in dem der jeweilige MÜllbehälter zusätzlich mit einer Entlüftungshaube (4) ausgerüstet wird, wobei die Entlüftungshaube beweglich auf den Müllbehälter aufgesetzt ist und dadurch der Müllbehälter werkzeuglos vom Trägerfahrzeug abgenommen werden kann, wobei die Entlüftungshaube vorzugsweise so gestaltet wird, daß sie gleichzeitig als Verriegelung für den Müllbehälter dient, wobei die Schutzhaube so ausgestaltet ist, daß sie im Inneren mit Prallgummis Fremdkörper abweist und dadurch Beschädigungen am Müllbehälter verhindert.

## Beschreibung

Die Erfindung betrifft eine Vorrichtung zum Aufsammeln von Gras, Laub oder Schmutz oder sonstige in der Landschaftspflege anfallende Stoffe in einen Behälter, dadurch gekennzeichnet, daß die Gesamtkonstruktion so ausgeführt ist, daß für das eigentliche Sammeln und Transportieren ein für alle Zwecke einsetzbarer Müllbehälter Verwendung finden kann.

Sammeleinrichtungen, wie nachfolgend beschrieben sind in vielgestaltiger Form bekannt, neu an dieser Einrichtung ist die Kombination mit einem Müllbehälter. Müllbehälter werden heute an vielfältigen Plätzen und Einrichtungen benötigt, d.h. im Klartext, an nahezu allen Stellen an denen Pflegearbeiten ausgeführt werden müssen, sind auch Müllbehälter vorhanden. Der Einsatz der Müllbehälter bietet somit den Vorteil, keine verschiedenen Behälter beschaffen zu müssen und diese auch aufzubewahren. Der weitere Vorteil besteht darin, daß bei der Entsorgung die Behälter an die entsprechenden Entleerungseinrichtungen angeschlossen werden können (Müllfahrzeuge mit automatischer Behälterentleerung), ohne daß vorher ein aufwendiges Umladen in bereits vorhandene Mülltonen erfolgen muß. Die Entsorgung (das meist teuerste im Gesamtarbeitsablauf) kann somit kostengünstig erfolgen . Neben der oben genannten Vorteile ergibt sich auch noch ein beachtlicher Geldwertvorteil, da bei Anschaffung dieses Gerätes eines der teuersten Teile nämlich der Sammelbehälter in der Regel entfallen kann, da dieser meist schon vorhanden ist.

Vorgesehen ist bei der Ausführung der Erfindung der Einsatz aller im Handel befindlichen Mülltonnen. Die Größe des zu wählenden Behälters entscheidet das beschaffte Trägerfahrzeug. Je größer die Arbeitsmaschine, je größer kann auch das Gerät und der dazugehörige Müllbehälter gewählt werden.

Der Sammelbehälter bzw. die Sammeleinrichtung wird in der Regel in Verbindung mit einem Gebläse, einem dazugehörigen Transportschlauch oder in Verbindung mit einem Sichelmähwerk an dem der Transportschlauch über einen Saugkasten verbunden wird, betrieben. Durch den Luftstrom, der entweder durch die Saugturbine (Transportturbine) oder durch die Messer des Mähwerks (in der Regel Sichelmähwerk) erzeugt wird, gelangt das Sammelgut (meistens durch den Mäher geschnittenes Gras oder Laub oder sonstige herumliegende Abfälle) über den Transportschlauch in den Sammelbebehälter.

Weitere Einzelheiten, Merkmale und Vorteile im Rahmen des Erfinderkomplexes ergeben sich aus der nachfolgenden Beschreibung bevorzugter erfindungsgemäßer Ausführungsbeispiele sowie anhand der Zeichnungen. Diese zeigen in:

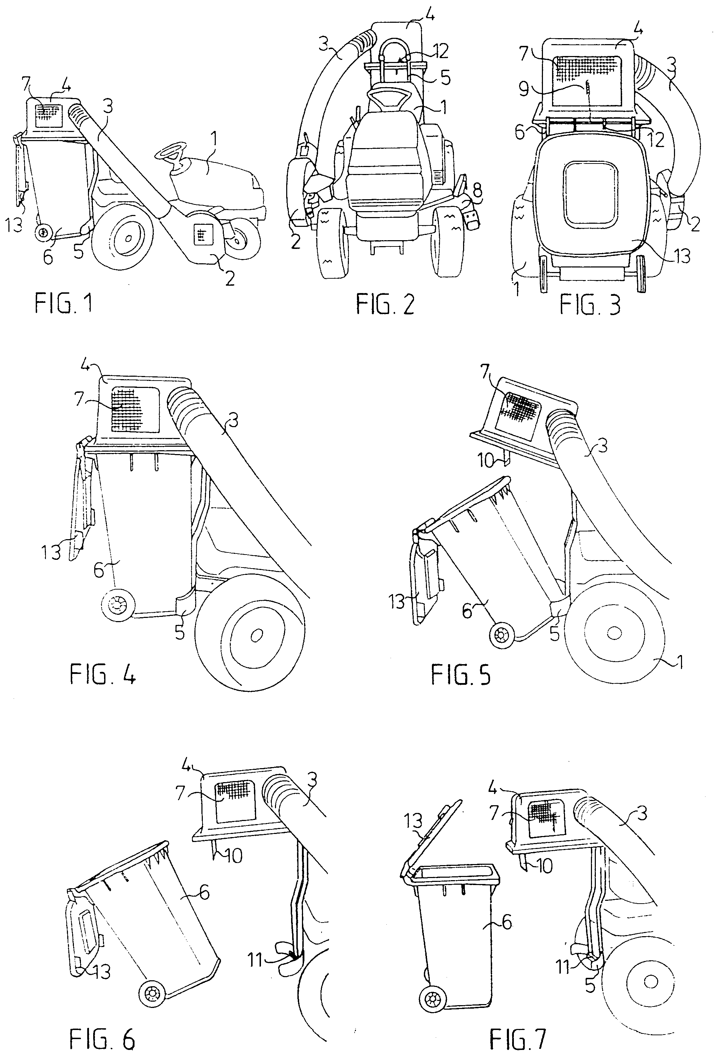

- Fig. 1: Einen Rasentraktor mit Sichelmähwerk und angebauter Saugturbine sowie angebauten Sammelbehälter mit Entlüftungshaube, Transportschlauch in Seitenansicht.
- Fig. 2: zeigt Kleintraktor mit Sichelmähwerk, Saugturbine, Transportschlauch, Sammel behälter mit Entlüftungshaube in Frontansicht.
- Fig. 3: zeigt Transportbehälter mit geöffneten Verschlußdeckel, aufgesetzter Entlüftungshaube, Transportschlauch und Saugturbine in Heckansicht.
- Fig. 4: zeigt Transportbehälter mit Entlüftungshaube, Transportschlauch in Arbeitsstellung in Seitenansicht.
- Fig. 5: zeigt Abnehmen des Transportbehälters durch Hochheben der Entlüftungshaube (werkzeuglos) in Seitenansicht.
- Fig. 6: zeigt das Abnehmen des Transportbehälters und Wegfahren vom Trägerfahrzeug in Seitenansicht.
- Fig. 7: zeigt das Verschließen des Transportbebehälters zur Entsorgung.

## Patentansprüche

1. Vorrichtung zum Aufsammeln von Gras, Laub oder Schmutz oder sonstigen in der Landschaftspflege anfallenden Stoffe in einen Behälter (6), dadurch gekennzeichnet, daß das Sammeln und Transportieren in einem für alle Zwecke verwendbaren (genormten) Müllbehälter (6) erfolgen kann.

2. Vorrichtung nach Anspruch 1, dadurch gekennzeichnet, daß auf dem Universalmüllbehälter (6) eine Entlüftungshaube (4) mit Gittern (7) aufgesetzt wird, die so gestaltet ist, daß während des Behälterfüllens die Luft aus dem Behälter (6) entweicht und der Behälter (6) dadurch vollständig gefüllt wird.

3. Vorrichtung nach Anspruch 1 dadurch gekennzeichnet, daß die Entlüftungshaube (4) an einem Doppelscharnier (12) befestigt ist und aufgrund dieser Einrichtung der Behälter (6) werkzeuglos vorn Trägerfahrzeug (1) abgenommen werden kann.

4. Vorrichtung nach Anspruch 1 dadurch gekennzeichnet, daß der Müllbehälter (6) in einen Tragrahmen (5) werkzeuglos eingehängt wird und über die Entlüftungshaube (4) mit dem Verschließen verriegelt wird und über eine Zugfeder (9) gesichert ist.

5. Vorrichtung nach Anspruch 1 dadurch gekennzeichnet, daß die Entlüftungshaube (4) im Inneren mit einem Prallschutz (10) versehen ist. Der Prallschutz (10) verhindert, daß die durch die Saugturbine (2) oder dem Mähwerk (8) aufgenommenen Fremdkörper -über den Transportschlauch (3) in die Entlüftungshaube (4) gebracht- Schäden an der Entlüfungshaube (4) oder dem Müllbehälter (6) verursachen.

6. Vorrichtung nach Anspruch 1 dadurch gekennzeichnet, daß der Müllbehälter (6) beim Einsetzen in den Tragrahmen (5) in einer Arretierung (11) oder Halteschiene (11) soweit vom Boden abgehoben wird, daß der Behälter (6) beim Arbeiten des Zug- oder Transportfahrzeugs (1) keine Behinderungen im Gelände hervorruft.
